# EUROPEAN PATENT SPECIFICATION

(11) **EP 3 715 798 B1**
(45) Date of publication and mention of the grant of the patent: **07.12.2022**
(21) Application number: 19165909.3
(22) Date of filing: 28.03.2019
(51) Int. Cl.: G01F 15/00, G01F 15/12

(54) **FLUSH SYSTEM FOR SENSORS ON A WORK VEHICLE**
SPÜLSYSTEM FÜR SENSOREN AN EINEM ARBEITSFAHRZEUG
SYSTÈME DE RINÇAGE POUR CAPTEURS SUR UN VÉHICULE DE TRAVAIL

(43) Date of publication of application: 30.09.2020
(73) Proprietor: CNH Industrial Belgium N.V., 8210 Zedelgem (BE)
(72) Inventor: De Smedt, Bart I.D., 9050 Ledeberg (BE)
(74) Representative: CNH Industrial IP Department

(56) References cited:
- US-A1- 2006 207 941

## Description

### Background of the invention

The present invention relates to work vehicles, and, more specifically to sensors carried by work vehicles.

Work vehicles are used in the agricultural, industrial, mining, construction and forestry technology sectors to perform various work functions, such as plowing, cultivating, harvesting, combining, etc. Many such vehicles incorporate sensors for detecting various conditions of the work vehicle. Some exemplary sensors may be used to determine, for example, air flow in various parts of the work vehicle, fluid flow in a fluid flow system, etc.

One exemplary work vehicle used in agricultural applications is a harvester known as a "combine" which is historically termed such because it combines multiple harvesting functions with a single harvesting unit, such as picking, threshing, separating and cleaning. During harvesting, one monitored parameter of the harvester can be the airflow developed within the harvester. To get an image of the airflow inside the harvester, pressure sensors can be used. The sensors can be connected to one or more measuring points within the crop flow by channels, which can be in the form of tubes, with air pressure inside the channel being measured to indicate the airflow within the harvester. Another exemplary monitored airflow parameters of the harvester, and work vehicles generally, can be the air intake of an engine.

Since the air in the testing channel may be static, particles such as dust, debris, and/or crop material can settle inside the channel and block the channel, which prevents the pressure sensor from getting an accurate reading of the airflow. This inaccurate reading can give the user an inaccurate image of the airflow, frustrating the purpose of including the pressure sensor in the first place. Further, the pressure sensors can be relatively delicate, which makes cleaning the test channel without affecting the sensor difficult.

What is needed in the art is a sensor for a work vehicle which is less prone to blockage than sensors known in the art.

### Summary of the invention

The present invention provides an air sensor arrangement which includes a valve that can fluidly couple a measuring point to a sensor in a first position and a flush line in a second position, with the sensor being fluidly uncoupled from the measuring point and flush line when the valve is in the second position.

The invention in one form is directed to an air sensor arrangement for a work vehicle including: a channel including a measuring point and a sensor. The air sensor arrangement is characterized by a valve fluidly coupled to both the sensor and the measuring point, the valve being actuatable between a first position where the measuring point and sensor are fluidly coupled together and a second position where the measuring point and a flush line are fluidly coupled together and fluidly uncoupled from the sensor.

In one exemplary embodiment, the valve is a 3/2 valve including a first port fluidly coupled to the measuring point, a second port fluidly coupled to the sensor, and a third port fluidly coupled to a flush line.

In another exemplary embodiment, the air sensor arrangement also includes a spring biasing the valve into the first position.

In yet another exemplary embodiment, the valve is configured to switch from the first position to the second position upon the fluid pressure in the flush line becoming a flushing pressure. The valve can be configured to switch from the second position to the first position upon the fluid pressure in the flush line dropping below the flushing pressure.

In yet another exemplary embodiment, the air sensor arrangement can also include a pressure source coupled to the flush line, the pressure source being configured to activate and pressurize the flush line at a predetermined time interval and/or a predetermined pressure reading. The pressure source can be configured to pressurize the flush line for a predetermined flush period based on the predetermined time interval and/or predetermined pressure reading. The predetermined time interval, predetermined pressure reading, and/or predetermined flush period can be adjustable via a controller.

In yet another exemplary embodiment, the sensor is a pressure sensor.

In yet another exemplary embodiment, the air sensor arrangement further includes an electric or hydraulic actuator coupled to the valve and configured to actuate the valve between the first position and the second position.

In yet another exemplary embodiment, there is provided a work vehicle including any of the previously described air sensor arrangements.

The invention in another form is directed to a method of flushing a channel including a measuring point in a work vehicle. The method is characterized by: coupling the measuring point to a sensor via a valve; uncoupling the measuring point from the sensor via the valve; coupling the measuring point to a flush line via the valve; and pressurizing the flush line to discharge material from the measuring point without exposing the sensor to pressure from the flush line.

In one exemplary embodiment, the valve is a 3/2 valve including a first port fluidly coupled to the measuring point, a second port fluidly coupled to the sensor, and a third port fluidly coupled to a flush line, the valve being actuatable between a first position where the measuring point and sensor are fluidly coupled together and a second position where the measuring point are fluidly coupled together. Pressurizing the flush line can actuate the valve between the first position and the second position. Alternatively, an electric or hydraulic actuator can actuate the valve from the first position to the second position.

An advantage of the present invention is that particle accumulation in the measuring point can be discharged by pressure from the flush line without affecting the sensor.

Another advantage is the pressure used to pressurize the flush line may also fluidly uncouple the sensor from the measuring channel.

### Brief description of the drawings

The above-mentioned and other features and advantages, and the manner of attaining them, will become more apparent and the invention will be better understood by reference to the following description of embodiments of the invention taken in conjunction with the accompanying drawings, wherein:
Fig. 1 is a schematic diagram of an exemplary embodiment of an air sensor arrangement formed in accordance with the present invention in a first position where a measuring point and a sensor are fluidly coupled;
Fig. 2 is a schematic diagram of the air sensor arrangement shown in Fig. 1 in a second position where the measuring point is fluidly coupled to a flush line and fluidly uncoupled from the sensor; and
Fig. 3 is a schematic diagram of the air sensor arrangement shown in Figs. 1-2 including an electric actuator.

Corresponding reference characters indicate corresponding parts throughout the several views. The exemplifications set out herein illustrate embodiments of the invention, and such exemplifications are not to be construed as limiting the scope of the invention in any manner.

### Detailed description of the invention

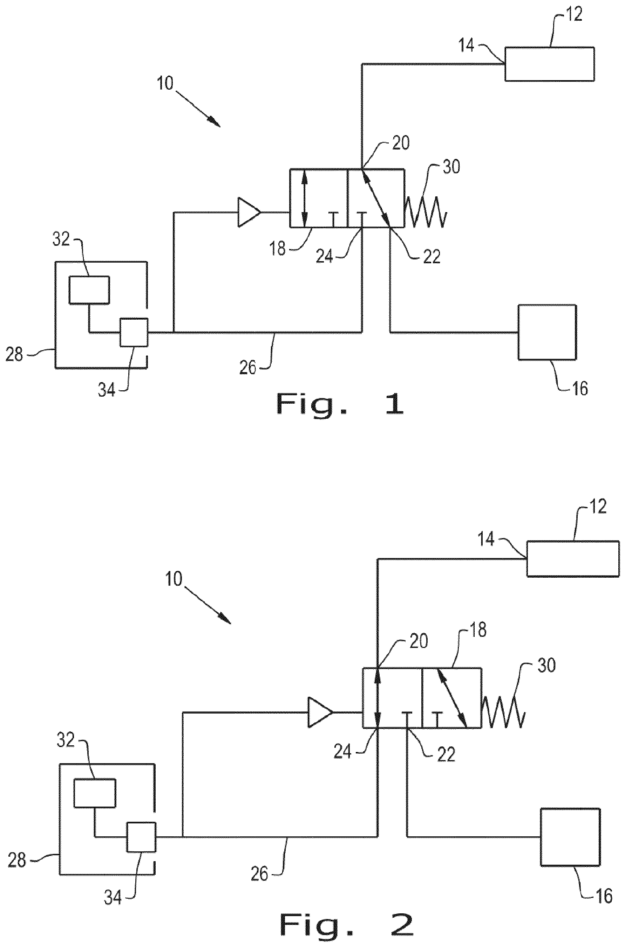

Referring now to the drawings, and more particularly to Fig. 1, there is shown an exemplary embodiment of an air sensor arrangement 10 formed in accordance with the present invention which includes a channel 12 including a measuring point 14, a sensor 16, shown as a pressure sensor, and a valve 18 fluidly coupled to both the measuring point 14 and the sensor 16. As should be appreciated, the channel 12 can be formed in a tube or other structure within a work vehicle, such as a combine harvester, and placed within the vehicle to measure various parameters of the vehicle. The measuring point 14 can then be a point or region within the channel 12 where a measurement of, for example, fluid pressure is desired. When the sensor 16 is a pressure sensor, the measured parameter can be air pressure at the measuring point 14, which can give a user an image of the airflow within the vehicle. It should be appreciated that while the sensor arrangement 10 is described herein in the context of being used in an agricultural vehicle such as a combine harvester, the sensor arrangement 10 of the present invention can be included in other work vehicles, such as tractors, bulldozers, other types of harvesters, etc. and is not limited to measuring only airflow within the vehicle. Similarly, the sensor 16 may be configured to measure parameters other than pressure; for example, the sensor 16 may be a chemical sensor configured to measure one or more substance concentrations within a fluid, air or otherwise, of the vehicle. Many such configurations are known in the art, so further description of the many possible configurations is omitted for brevity.

As can be seen in Fig. 1, the valve 18 may include a first port 20 fluidly coupled to the measuring point 14, a second port 22 fluidly coupled to the sensor 16, and a third port 24 fluidly coupled to a flush line 26. The flush line 26 can be fluidly coupled to a pressure source 28, the significance of which is described further herein, which may be, for example, an accumulator, a pump, or other types of known constructions. It should be appreciated that the pressure source 28 can provide a pressurized fluid, which may be in the form of a gas and/or a liquid. As can be seen in Fig. 1, the valve 18 can be what is commonly referred to as a "3/2 valve" having a first position where the measuring point 14 and the sensor 16 are fluidly coupled together, so the sensor 16 can measure a parameter at the measuring point 14, such as the air pressure when the sensor 16 is a pressure sensor. Such 3/2 valves are commercially available and sold by FESTO^{®}, among other manufacturers, so the specific details of the construction of the exemplary 3/2 valve 18 are omitted for brevity. It should be appreciated that while the exemplary embodiment of the valve 18 shown herein is a 3/2 valve, the valve 18 can be configured in other ways in accordance with the present invention, such as a 4/2 valve, 4/3 valve, 5/2 valve, etc. When the valve 18 is in the first position, the measuring point 14 and the sensor 16 may be fluidly coupled together via the first port 20 and second port 22 being fluidly coupled together. The third port 24, and therefore the flush line 26, may be fluidly uncoupled from both the first port 20 and second port 22 when the valve 18 is in the first position so pressure in the flush line 26 is isolated from the sensor 16 to prevent a flushing pressure in the flush line 26, which may be significantly higher than the pressure at the measuring point 14, from reaching the sensor 16 and affecting operation of the sensor 16. A spring 30 may act against the valve 18 to bias the valve 18 into the first position, so the measuring point 14 and sensor 16 are normally fluidly coupled to allow measurement of a parameter at the measuring point 14 by the sensor 16.

During operation, particles, such as dust or crop material, can accumulate in the channel 12 and interfere with the ability of the sensor 16 to accurately measure the parameter at the measuring point 14. To clean the particles from the channel 12, and referring now to Fig. 2, the valve 18 can be actuated from the first position to a second position where the measuring point 14 and flush line 26 are fluidly coupled together and fluidly uncoupled from the sensor 16. Once the valve 18 is in the second position, flushing pressure in the flush line 26 from the pressure source 28, which can be significantly greater than the pressure at the measuring point 14, can travel toward the measuring point 14 through the valve 18 and escape out the channel 12, discharging particles out of the channel 12 in the process. Since the sensor 16 is fluidly uncoupled from the measuring point 14 and flush line 26 during this flushing, the sensor 16 is not exposed to the increased flushing pressure and therefore should not be affected by the flushing pressure discharging material from the measuring point 14 and channel 12, allowing for the use of a high flushing pressure to clean out the measuring point 14 and channel 12 with minimal risk of damaging the sensor 16. Since the valve 18 actuates between the first position and the second position, the channel 12 can be formed to have a sufficient length so particles in the channel 12 have a remote chance of entering the valve 18 through the first port 20 and potentially jamming the ability of the valve 18 to actuate between the first position and second position.

To control the flushing of the measuring point 14 by the flush line 26, the pressure in the flush line 26 from the pressure source 28 may be selectively controlled by a controller 32 of the pressure source 28 by, for example, selective activation of a flush valve 34 between the flush line 26 and the pressure source 28. Alternatively, the controller 32 may selectively activate the pressure source 28 to produce the flushing pressure in the flush line 26. The controller 32, and thus the pressure source 28, may be configured to activate and pressurize the flush line 26 at a predetermined time interval so the measuring point 14 and channel 12 are flushed at regular intervals. Alternatively, the controller 32 can be coupled to the sensor 16 and be configured to pressurize and activate the flush line 26 to flush the measuring point 14 and channel 12 when the sensor 16 outputs a predetermined reading, such as a predetermined pressure reading, which indicates the measuring point 14 and/or channel 12 may be clogged and benefit from flushing. In yet another alternative, the pressure source 28 can be selectively activated by the user selecting a prompt on a control panel of the vehicle when flushing is desired. Further, the pressure source 28 can be configured to pressurize the flush line 26 for a predetermined flush period that may be based on the predetermined time interval and/or the predetermined pressure reading. For example, the predetermined flush period may be directly correlated with the predetermined time interval so the flush period is longer when there are larger intervals between flushing. Further, the predetermined flush period may be inversely correlated with the predetermined pressure reading so the flush period is longer when the predetermined pressure reading is lower, which may be indicative of a clogged channel 12. It should be appreciated that the foregoing possibilities are exemplary only, and the flush period can be adjusted and/or predetermined as desired by a user.

Actuating the valve 18 from the first position to the second position can be accomplished in a variety of ways. In the exemplary embodiment shown in Figs. 1-2, the valve 18 can be actuated between the first position and second position by pressure in the flush line 26 acting against the valve 18 in a direction opposite the acting direction of the spring 30 to force the valve 18 into the second position, i.e., the valve 18 can be a pneumatically activated valve. When the valve 18 is pneumatically activated, the previously described pressure source 28 can selectively control switching the position of the valve 18. Upon the pressure in the flush line 26 reaching the flushing pressure, the valve 18 can switch to the second position from the first position and the flushing pressure can travel through the valve 18 to the measuring point 14 and out the channel 12. Upon the pressure in the flush line 26 dropping below the flushing pressure, the force of the spring 30 can overcome the force from the pressure in the flush line 26 and switch the valve 18 back into the first position to fluidly couple the measuring point 14 and sensor 16 once again. In this sense, the pressure in flush line 26 may be controlled in a variety of ways to switch the valve 18 between the first position and second position. For example, the pressure source 28 may pressurize the flush line 26 to the flushing pressure for a sustained flush period, such as one or more seconds, to produce a sustained flushing of the measuring point 14 and channel 12, with the spring 30 then returning the valve 18 to the first position shortly after the flush period ends. Alternatively, the pressure source 28 may suddenly pressurize the flush line 26 in a "burst" that places the valve 18 in the second position just long enough for the burst of flushing pressure to flush the measuring point 14 and channel 12 before the pressure in the flush line 26 drops enough that the spring 30 returns the valve 18 to the first position. Pneumatically actuating the valve 18 with the flushing pressure of the flush line 26, therefore, can allow pressurizing the flush line 26 to automatically activate flushing of the measuring point 14 and channel 12.

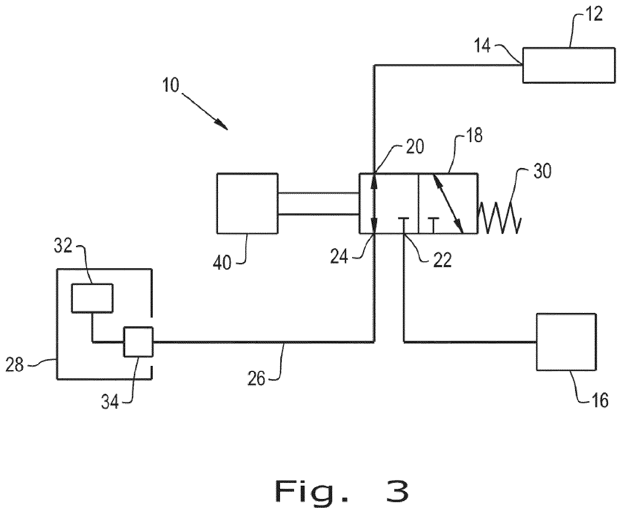

In another exemplary embodiment, and referring now to Fig. 3, it can be seen that actuating the valve 18 between the first position and the second position can be realized by using a separate actuator 40, shown as an electric actuator, which forces the valve 18 into the second position against the force of the spring 30. In such a configuration, the actuator 40 can be controlled in conjunction with the pressure source 28 and flush line 26 to flush the measuring point 14 and channel 12. Using a separate actuator, such as an electric actuator 40, to switch the valve 18 between the first position and second position may be useful in situations where, for example, a relatively high flushing pressure necessary to both actuate the valve 18 against the spring 30 and flush the measuring point 14 and channel 12 is not desired and/or not feasible. While the separate actuator 40 is previously described as an electric actuator, the separate actuator 40 can also be a hydraulic actuator, if desired.

In another exemplary embodiment according to the present invention, a method of flushing a channel 12 including a measuring point 14 in a work vehicle is provided which includes coupling the measuring point 14 to a sensor 16 via a valve 18. The measuring point 14 is uncoupled from the sensor 16 via the valve 18 and the measuring point 14 is coupled to a flush line 26 via the valve 18 to allow pressurizing the flush line 26 to discharge material from the measuring point 14 without exposing the sensor 16 to pressure from the flush line 26. The valve 18 may be a 3/2 valve including a first port 20 fluidly coupled to the measuring point 14, a second port 22 fluidly coupled to the sensor 16, and a third port 24 fluidly coupled to the flush line 26, the valve 18 being actuatable between a first position (shown in Fig. 1) where the measuring point 14 and sensor 16 are fluidly coupled together and a second position (shown in Figs. 2-3) where the measuring point 14 and flush line 26 are fluidly coupled together. In one exemplary embodiment, pressurizing the flush line 26 actuates the valve 18 from the first position and the second position, as previously described. In other exemplary embodiments, an electric or hydraulic actuator 40 actuates the valve 18 from the first position to the second position. It should be appreciated that other methods of flushing the channel 12 are also possible in accordance with the present invention, and the previously described method is only one such exemplary method.

While this invention has been described with respect to at least one embodiment, the present invention can be further modified within the scope of this disclosure as defined by the appended claims. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An air sensor arrangement (10) for a work vehicle, comprising:
- a channel (12) including a measuring point (14); and
- a sensor (16);
**characterized in that** the arrangement (10) further comprises:
- a valve (18) fluidly coupled to both the sensor (16) and the measuring point (14), the valve (18) being actuatable between a first position where the measuring point (14) and sensor (16) are fluidly coupled together and a second position where the measuring point (14) and a flush line (26) are fluidly coupled together and fluidly uncoupled from the sensor (16).

2. The air sensor arrangement (10) of claim 1, wherein the valve (18) is a 3/2 valve including a first port (20) fluidly coupled to the measuring point (14), a second port (22) fluidly coupled to the sensor (16), and a third port (24) fluidly coupled to the flush line (26).

3. The air sensor arrangement (10) of claim 1, further comprising a spring (30) biasing the valve (18) into the first position.

4. The air sensor arrangement (10) of any one of the preceding claims, wherein the valve (18) is configured to switch from the first position to the second position upon the fluid pressure in the flush line (26) becoming a flushing pressure.

5. The air sensor arrangement (10) of claim 4, wherein the valve (18) is configured to switch from the second position to the first position upon the fluid pressure in the flush line (26) dropping below the flushing pressure.

6. The air sensor arrangement (10) of any one of the preceding claims, further comprising a pressure source (28) coupled to the flush line (26).

7. The air sensor arrangement (10) of claim 6, wherein the pressure source (28) is configured to activate and pressurize the flush line (26) at a predetermined time interval and/or a predetermined pressure reading.

8. The air sensor arrangement (10) of claim 7, wherein the pressure source (28) is configured to pressurize the flush line (26) for a predetermined flush period based on the predetermined time interval and/or predetermined pressure reading.

9. The air sensor arrangement (10) of claims 6 to 8, wherein the predetermined time interval, predetermined pressure reading, and/or predetermined flush period is adjustable via a controller (32).

10. The air sensor arrangement (10) of any one of the preceding claims, wherein the sensor (16) is a pressure sensor.

11. The air sensor arrangement (10) of any one of claims 1 to 3, further comprising an electric or hydraulic actuator (40) coupled to the valve (18) and configured to actuate the valve (18) between the first position and the second position.

12. A work vehicle including the air sensor arrangement (10) of any one of the preceding claims.

13. A method of flushing a channel (12) including a measuring point (14) in a work vehicle, **characterized in that** the method comprises the steps of:
- coupling the measuring point (14) to a sensor (16) via a valve (18);
- uncoupling the measuring point (14) from the sensor (16) via the valve (18);
- coupling the measuring point (14) to a flush line (26) via the valve (18); and
- pressurizing the flush line (26) to discharge material from the measuring point (14) without exposing the sensor (16) to pressure from the flush line (28).

14. The method of claim 13, wherein the valve (18) is a 3/2 valve including a first port (20) fluidly coupled to the measuring point (14), a second port (22) fluidly coupled to the sensor (16), and a third port (24) fluidly coupled to the flush line (26), the valve (18) being actuatable between a first position where the measuring point (14) and sensor (16) are fluidly coupled together and a second position where the measuring point (14) and flush line (26) are fluidly coupled together.

15. The method of claim 13, wherein pressurizing the flush line (26) actuates the valve (28) from the first position to the second position or an electric or hydraulic actuator (40) actuates the valve (18) from the first position to the second position.

## Patentansprüche

1. Luftsensoranordnung (10) für ein Arbeitsfahrzeug mit:
- einem Kanal (12), der eine Messstelle (14) aufweist; und
- einem Sensor (16);
**dadurch gekennzeichnet, dass** die Anordnung (10) des Weiteren umfasst:
- ein Ventil (18), das sowohl mit dem Sensor (16) als auch mit der Messstelle (14) fluidisch verbunden ist, wobei das Ventil (18) zwischen einer ersten Stellung, in der die Messstelle (14) und der Sensor (16) fluidisch miteinander verbunden sind, und einer zweiten Stellung betätigbar ist, in der die Messstelle (14) und eine Spülleitung (26) fluidisch miteinander verbunden sind und vom Sensor (16) fluidisch getrennt sind.

2. Luftsensoranordnung (10) nach Anspruch 1, wobei das Ventil (18) ein 3/2-Ventil ist mit einem ersten Anschluss (20), der mit der Messstelle (14) fluidisch verbunden ist, einem zweiten Anschluss (22), der mit dem Sensor (16) fluidisch verbunden ist und einem dritten Anschluss (24), der mit der Spülleitung (26) fluidisch verbunden ist.

3. Luftsensoranordnung (10) nach Anspruch 1, des Weiteren eine Feder (30) umfassend, die das Ventil (18) in die erste Stellung vorspannt.

4. Luftsensoranordnung (10) nach einem der vorhergehenden Ansprüche, wobei das Ventil (18) dazu eingerichtet ist, von der ersten Stellung zu der zweiten Stellung zu wechseln, wenn der Fluiddruck in der Spülleitung (26) zu einem Spüldruck wird.

5. Luftsensoranordnung (10) nach Anspruch 4, wobei das Ventil (18) dazu eingerichtet ist, von der zweiten Stellung in die erste Stellung zu wechseln, wenn der Fluiddruck in der Spülleitung (26) unter den Spüldruck abfällt.

6. Luftsensoranordnung (10) nach einem der vorhergehenden Ansprüche, des Weiteren eine Druckquelle (28) umfassend, die mit der Spülleitung (26) verbunden ist.

7. Luftsensoranordnung (10) nach Anspruch 6, wobei die Druckquelle (28) dazu eingerichtet ist, die Spülleitung (26) in einem vorbestimmten Zeitintervall und/oder bei einem vorbestimmten Druckmesswert zu aktivieren und unter Druck zu setzen.

8. Luftsensoranordnung (10) nach Anspruch 7, wobei die Druckquelle (28) dazu eingerichtet ist, die Spülleitung (26) basierend auf dem vorbestimmten Zeitintervall und/oder dem vorbestimmten Druckmesswert für eine vorbestimmte Spüldauer unter Druck zu setzen.

9. Luftsensoranordnung (10) nach den Ansprüchen 6 bis 8, wobei das vorbestimmte Zeitintervall, der vorbestimmte Druckmesswert und/oder die vorbestimmte Spüldauer mittels einer Steuereinrichtung (32) einstellbar sind.

10. Luftsensoranordnung (10) nach einem der vorhergehenden Ansprüche, wobei der Sensor (16) ein Drucksensor ist.

11. Luftsensoranordnung (10) nach einem der Ansprüche 1 bis 3, des Weiteren eine elektrische oder hydraulische Betätigungseinrichtung (40) aufweisend, die mit dem Ventil (18) verbunden ist und dazu eingerichtet ist, das Ventil (18) zwischen der ersten Stellung und der zweiten Stellung zu betätigen.

12. Arbeitsfahrzeug mit der Luftsensoranordnung (10) nach einem der vorhergehenden Ansprüche.

13. Verfahren zum Spülen eines Kanals (12) mit einer Messstelle (14) in einem Arbeitsfahrzeug,
**dadurch gekennzeichnet, dass** das Verfahren die Schritte umfasst:
- Verbinden der Messstelle (14) mit einem Sensor (16) mittels eines Ventils (18);
- Trennen der Messstelle (14) von dem Sensor (16) mittels des Ventils (18);
- Verbinden der Messstelle (14) mit einer Spülleitung (26) mittels des Ventils (18); und
- Unter Druck Setzen der Spülleitung (26), um Material aus der Messstelle (14) abzulassen, ohne den Sensor (16) dem Druck von der Spülleitung auszusetzen.

14. Verfahren nach Anspruch 13, wobei das Ventil (18) ein 3/2-Ventil ist mit einem ersten Anschluss (20), der mit der Messstelle (14) fluidisch verbunden ist, einem zweiten Anschluss (22), der mit dem Sensor (16) fluidisch verbunden ist und einem dritten Anschluss (24), der mit der Spülleitung (26) fluidisch verbunden ist, wobei das Ventil (18) zwischen einer ersten Stellung, in der die Messstelle (14) und der Sensor (16) fluidisch miteinander verbunden sind, und einer zweiten Stellung betätigbar ist, in der die Messstelle (14) und die Spülleitung (26) fluidisch miteinander verbunden sind.

15. Verfahren nach Anspruch 13, wobei das unter Druck setzen der Spülleitung (26) ds Ventil (28) aus der ersten Stellung in die zweite Stellung betätigt oder eine elektrische oder hydraulische Betätigungseinrichtung (40) das Ventil (18) aus der ersten Stellung in die zweite Stellung betätigt.

## Revendications

1. Dispositif de capteur d'air (10) pour véhicule de travail (10), comprenant :
- un canal (12) comprenant un point de mesure (14) ; et
- un capteur (16) ;
**caractérisé en ce que** le dispositif (10) comprend en outre :
- une soupape (18) reliée fluidiquement à la fois au capteur (16) et au point de mesure (14), la soupape (18) pouvant être actionnée entre une première position dans laquelle le point de mesure (14) et le capteur (16) sont couplés fluidiquement l'un à l'autre et une seconde position dans laquelle le point de mesure (14) et une conduite de rinçage (26) sont couplés fluidiquement l'un à l'autre et découplés fluidiquement du capteur (16).

2. Dispositif de capteur d'air (10) selon la revendication 1, dans lequel la soupape (18) est une soupape 3/2 comprenant un premier port (20) couplé fluidiquement au point de mesure (14), un deuxième port (22) couplé fluidiquement au capteur (16), et un troisième port (24) couplé fluidiquement à la conduite de rinçage (26).

3. Dispositif de capteur d'air (10) selon la revendication 1, comprenant en outre un ressort (30) sollicitant la soupape (18) dans la première position.

4. Dispositif de capteur d'air (10) selon l'une quelconque des revendications précédentes, dans lequel la soupape (18) est configurée pour commuter de la première position à la seconde position lorsque la pression de fluide dans la conduite de rinçage (26) devient une pression de rinçage.

5. Dispositif de capteur d'air (10) selon la revendication 4, dans lequel la soupape (18) est configurée pour commuter de la seconde position à la première position lorsque la pression de fluide dans la conduite de rinçage (26) chute sous la pression de rinçage.

6. Dispositif de capteur d'air (10) selon l'une quelconque des revendications précédentes, comprenant en outre une source de pression (28) couplée à la conduite de rinçage (26).

7. Dispositif de capteur d'air (10) selon la revendication 6, dans lequel la source de pression (28) est configurée pour activer et pressuriser la conduite de rinçage (26) à un intervalle de temps prédéterminé et/ou à une lecture de pression prédéterminée.

8. Dispositif de capteur d'air (10) selon la revendication 7, dans lequel la source de pression (28) est configurée pour pressuriser la conduite de rinçage (26) pour une période de rinçage prédéterminée basée sur l'intervalle de temps prédéterminé et/ou la lecture de pression prédéterminée.

9. Dispositif de capteur d'air (10) selon les revendications 6 à 8, dans lequel l'intervalle de temps prédéterminé, la lecture de pression prédéterminée, et/ou la période de rinçage prédéterminée est réglable par le biais d'un dispositif de commande (32).

10. Dispositif de capteur d'air (10) selon l'une quelconque des revendications précédentes, dans lequel le capteur (16) est un capteur de pression.

11. Dispositif de capteur d'air (10) selon l'une quelconque des revendications 1 à 3, comprenant en outre un actionneur électrique ou hydraulique (40) couplé à la soupape (18) et configuré pour activer la soupape (18) entre la première position et la seconde position.

12. Véhicule de travail comprenant le dispositif de capteur d'air (10) selon l'une quelconque des revendications précédentes.

13. Procédé pour rincer un canal (12) comprenant un point de mesure (14) dans un véhicule de travail,
**caractérisé en ce que** le procédé comprend les étapes consistant à :
- coupler le point de mesure (14) à un capteur (16) par le biais d'une soupape (18) ;
- découpler le point de mesure (14) du capteur (16) par le biais de la soupape (18) ;
- coupler le point de mesure (14) à une conduite de rinçage (26) par le biais de la soupape (18) ; et
- pressuriser la conduite de rinçage (26) pour évacuer le matériau du point de mesure (14) sans exposer le capteur (16) à la pression de la conduite de rinçage (28).

14. Procédé selon la revendication 13, dans lequel la soupape (18) est une soupape 3/2 comprenant un premier port (20) couplé fluidiquement au point de mesure (14), un deuxième port (22) couplé fluidiquement au capteur (16), et un troisième port (24) couplé fluidiquement à la conduite de rinçage (26), la soupape (18) pouvant être actionnée entre une première position dans laquelle le point de mesure (14) et le capteur (16) sont fluidiquement couplés l'un à l'autre et une seconde position dans laquelle le point de mesure (14) et la conduite de rinçage (26) sont fluidiquement couplés l'un à l'autre.

15. Procédé selon la revendication 13, dans lequel le fait de pressuriser la conduite de rinçage (26) actionne la soupape (28) de la première position à la seconde position ou un actionneur électrique ou hydraulique (40) actionne la soupape (18) de la première position à la seconde position.
